# FASCICULE DE BREVET EUROPEEN

(11) **EP 2 265 456 B1**
(45) Date de publication et mention de la délivrance du brevet: **13.06.2012**
(21) Numéro de dépôt: 09733914.7
(22) Date de dépôt: 17.03.2009
(51) Int. Cl.: B60K 11/04, B60K 11/08, B62D 25/08

(54) **DISPOSITIF DE GUIDAGE D'AIR D'UNE STRUCTURE DE FACE AVANT DE VEHICULE**
VORRICHTUNG ZUR ABLENKUNG VON LUFT VON EINER FAHRZEUGVORDERFLÄCHENSTRUKTUR
DEVICE FOR GUIDING AIR FROM VEHICLE FRONT SURFACE STRUCTURE

(30) Priorité: 22.04.2008 FR 0802232
(43) Date de publication de la demande: 29.12.2010
(73) Titulaire: Renault s.a.s., 92100 Boulogne-Billancourt (FR)
(72) Inventeur: CARRON, Matthieu, F-78210 Saint Cyr (FR); MASSOULIE, Juliette, F-78950 Gambais (FR); VE LASCO, Angel, F-78960 Voisins Le Bretonneux (FR)
(86) Numéro de dépôt international: PCT/FR2009/050445
(87) Numéro de publication internationale: WO 2009/130427

(56) Documents cités:
- EP-A- 1 352 810
- EP-A- 1 785 306
- DE-A1-102007 024 898

## Description

L'invention concerne un dispositif de guidage d'air d'une structure de face avant de véhicule, notamment d'un véhicule automobile.

Un véhicule possède sur sa face avant des entrées d'air permettant l'entrée d'un flux d'air pour le refroidissement du moteur. Ces entrées d'air consistent en des orifices réalisés dans le pare chocs avant du véhicule.

Le refroidissement du moteur est obtenu grâce à des échangeurs (radiateur, refroidisseur d'air, condenseur) situés en face avant, devant le moteur, et traversés par le flux d'air.

Afin de diriger le flux d'air entrant vers les échangeurs, les véhicules sont généralement équipés de convergents qui sont des pièces, le plus souvent en plastique, disposées de manière à guider l'air depuis les entrées d'air du pare-chocs jusqu'aux échangeurs. Ces convergents sont ainsi disposés entre le pare-chocs et les échangeurs. On distingue les convergents latéraux, disposés sensiblement verticalement suivant la direction longitudinale du véhicule, et le convergent supérieur, disposé sensiblement horizontalement au niveau de l'extrémité supérieure des échangeurs.

Les convergents supérieur et latéraux sont actuellement fixés directement sur les échangeurs, indépendamment les uns des autres. Un tel montage présente l'inconvénient de rendre difficilement étanche l'interface entre les convergents latéraux et le convergent supérieur. De plus, les convergents latéraux ont tendance à s'écarter l'un de l'autre sous l'effet du flux d'air en raison de leur relative souplesse, ce qui engendre des fuites supplémentaires.

Or, il apparaît actuellement nécessaire d'améliorer le débit d'air traversant les échangeurs afin d'améliorer leurs performances de refroidissement et permettre ainsi de répondre aux nouvelles réglementations antipollution qui ont augmenté les besoins en refroidissement de certaines motorisations, telles que les motorisations diesel couplées à des boites automatiques.

Il existe donc un besoin d'améliorer l'étanchéité de la zone entre les échangeurs et le pare-chocs afin de diriger un maximum du flux d'air entrant vers les échangeurs et améliorer ainsi le refroidissement du moteur. DE 10 2007 024898 A décrit un dispositif dans lequel le convergent supérieur est fixé aux convergents latéraux et aux échangeurs.

L'invention vise à pallier cet inconvénient en proposant un dispositif de guidage d'air comprenant un convergent supérieur fixé directement et uniquement aux convergents latéraux.

Un tel montage présente l'avantage d'assurer l'étanchéité au niveau de interface entre les convergents latéraux est supérieur et d'empêcher les convergents latéraux de s'ouvrir sous l'action de l'air.

A cet effet, l'objet de l'invention concerne un dispositif de guidage d'air d'une structure de face avant de véhicule comprenant des échangeurs situés en avant du moteur, ledit dispositif comprenant deux convergents latéraux, destinés à être disposés de part et d'autre des échangeurs, et un convergent supérieur, destiné à être disposé sur le dessus des échangeurs, afin de guider l'air entrant par des entrées d'air du pare-chocs du véhicule jusqu'aux échangeurs, caractérisé en ce que les convergents latéraux et le convergent supérieur sont équipés de moyens de fixation aptes à assurer la fixation du convergent supérieur uniquement sur chacun des convergents latéraux.

Il n'est dès lors plus nécessaire de fixer le convergent supérieur sur les échangeurs. Le convergent supérieur est fixé uniquement aux convergents latéraux, limitant ainsi les mouvements de ces derniers induits par le flux d'air.

Avantageusement, les moyens de fixation permettent une fixation réversible du convergent supérieur sur les convergents latéraux afin de permettre un démontage du convergent supérieur. Ces moyens de fixation seront par exemple conçus est disposés de manière à assurer un appui du convergent supérieur sur les convergents latéraux suffisant pour réaliser une étanchéité entre le convergent supérieur et les convergents latéraux.

Avantageusement, le dispositif est pourvu de moyens de positionnement du convergent supérieur sur les convergents latéraux.

Plus particulièrement, les moyens de positionnement comprennent au moins un organe de réception femelle, disposé sur chacun des convergents latéraux, et au moins deux organes mâles solidaires du convergent supérieur, chaque organe mâle étant apte à coopérer avec l'un des organes femelles.

Avantageusement, l'organe de réception femelle est une fente, réalisée sur le bord supérieur de chaque convergent latéral, et l'organe mâle est une patte, apte à s'insérer dans ladite fente disposée sur le bord latéral du convergent supérieur.

Les moyens de positionnement peuvent ainsi être réalisés de manière simple et économique.

Avantageusement, les organes mâles et femelles sont disposés et conçus de manière à permettre une rotation du convergent supérieur par rapport aux convergents latéraux suivant un axe sensiblement horizontal et transversal.

Cette caractéristique permet de faciliter le positionnement et le montage du convergent supérieur sur les convergents latéraux, avant sa fixation sur ces derniers.

Avantageusement, les organes mâles et femelles sont conçus de manière à permettre un mouvement relatif du convergent supérieur par rapport aux convergents latéraux suivant une direction sensiblement horizontale et transversale. Le jeu ainsi obtenu permet de faciliter le montage du convergent supérieur malgré les dispersions observées dans les positions des convergents latéraux d'un véhicule à un autre.

Avantageusement, les moyens de fixation sont situés sur les bords supérieurs de chacun des convergents latéraux et sur les bords latéraux du convergent supérieur.

Les moyens de fixation sont par exemple des moyens d'encliquetage.

Plus particulièrement, les moyens d'encliquetage comprennent au moins une patte d'encliquetage apte à venir en prise avec au moins un logement correspondant, ledit logement présentant une forme tronconique afin de faciliter l'insertion de la patte d'encliquetage.

L'invention est maintenant décrite en référence aux dessins annexés, non limitatifs, dans lesquels :
- la figure 1 est une vue de face d'une structure de face avant de véhicule automobile montrant un dispositif de guidage d'air selon l'invention ;
- la figure 2 est une vue en perspective d'un convergent latéral et du convergent supérieur du dispositif de guidage représenté figure 1 ;
- la figure 3 est agrandissement des moyens de positionnement du dispositif de guidage représenté sur la figure 1 ;
- la figure 4 représente un agrandissement de l'organe mâle des moyens de positionnement de la figure 3 ;
- la figure 5 représente un agrandissement de l'organe femelle des moyens de positionnement de la figure 3 ;
- la figure 6 est une vue de en perspective du bord supérieur d'un convergent latéral du dispositif de guidage représenté figure 1 ;
- la figure 7 est une vue en coupe des moyens de fixation d'un convergent latéral et d'un convergent supérieur.

Dans la suite, les directions avant et arrière font référence aux directions avant et arrière du véhicule, de même les directions longitudinale et transversale renvoient aux directions longitudinale et transversale du véhicule.

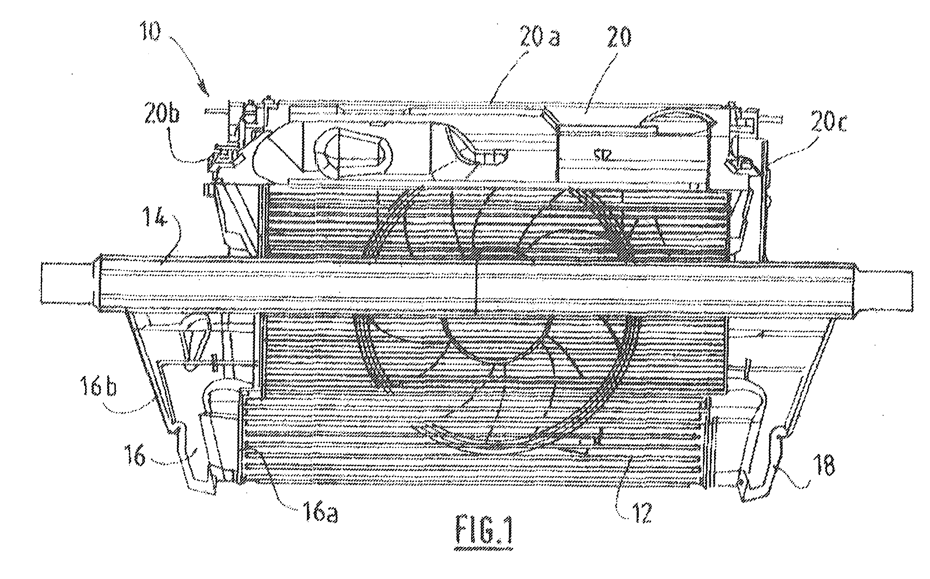

La figure 1 représente une structure de face avant 10 de véhicule comprenant des échangeurs 12 destinés à refroidir le moteur du véhicule.

Cette structure avant comprend également une traverse extrême avant 14, située entre les échangeurs 12 et le pare-chocs avant du véhicule (non représenté).

Sur la figure 1 sont également visibles deux convergents latéraux 16, 18 et un convergent supérieur 20 destinés à guider l'air entrant par des entrées d'air du pare-chocs du véhicule jusqu'aux échangeurs 12 situés en avant du moteur du véhicule.

Le dispositif de guidage d'air selon l'invention comprend les deux convergents latéraux 16, 18 et le convergent supérieur 20. Les convergents latéraux 16, 18 sont disposés de part et d'autre des échangeurs, sensiblement verticalement, et le convergent supérieur est disposé sur le dessus des échangeurs, sensiblement horizontalement.

Les convergents latéraux 16, 18 sont identiques par symétrie par rapport à un plan longitudinal vertical, seule la structure de l'un d'eux est décrite en référence aux figures.

Le convergent latéral 16 est formé d'une plaque unique dont le bord arrière 16a est destiné à venir en appui contre les échangeurs 12, le bord avant 16b est destiné à venir en appui contre le pare-chocs (non représenté) et le bord supérieur 16c est destiné à recevoir le convergent supérieur 20.

Le convergent supérieur 20 est également formé d'une unique plaque dont le bord arrière 20a est destiné à venir en appui contre le dessus des échangeurs 12 et les bords latéraux 20b et 20c sont destinés à venir en appui contre les convergents latéraux 16 et 18 respectivement.

Selon l'invention, les convergents latéraux 16, 18 et le convergent supérieur 20 sont équipés de moyens de fixation aptes à assurer la fixation du convergent supérieur sur chacun des convergents latéraux.

Dans l'exemple représenté, le dispositif de guidage d'air selon l'invention est également pourvu de moyens de positionnement du convergent supérieur sur les convergents latéraux.

Ces moyens de positionnement comprennent au moins un organe de réception femelle, disposé sur chacun des convergents latéraux, et au moins deux organes mâles solidaires du convergent supérieur, chaque organe mâle étant apte à coopérer avec l'un des organes femelles.

Dans l'exemple représenté, l'organe de réception femelle est une fente 30, réalisée sur le bord supérieur de chaque convergent latéral, et l'organe mâle est une patte 40, apte à s'insérer dans ladite fente disposée sur le bord latéral du convergent supérieur.

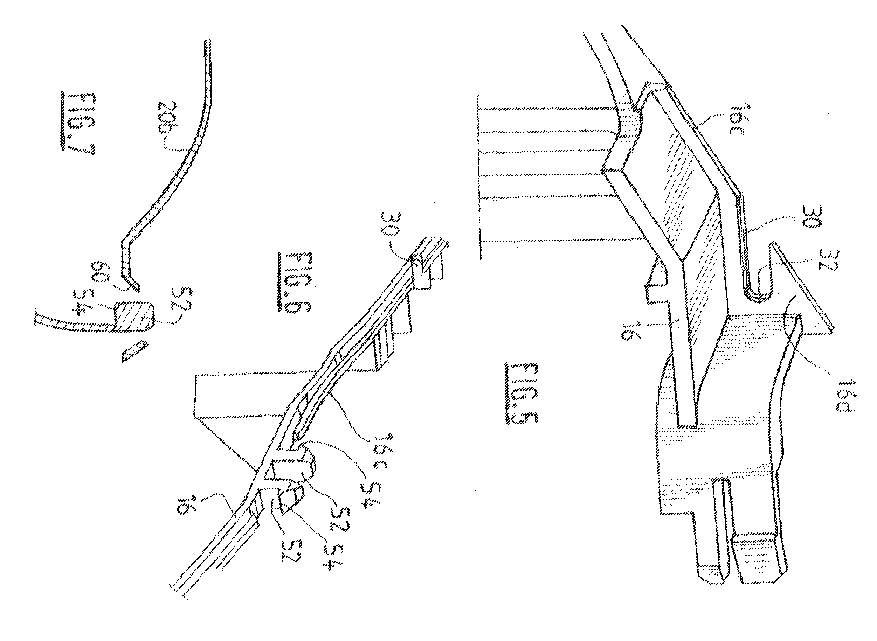

Dans l'exemple, la fente 30 s'étend sensiblement horizontalement, tel que visible sur la figure 5 en direction de l'avant du véhicule, lorsque le convergent latéral est monté sur les échangeurs. Cette fente 30 est située à proximité de l'extrémité supérieure du bord supérieur 16c du convergent latéral, tel que visible sur la figure 6. Le fond 32 de la fente présente également une forme d'arc de cercle (figure 5).

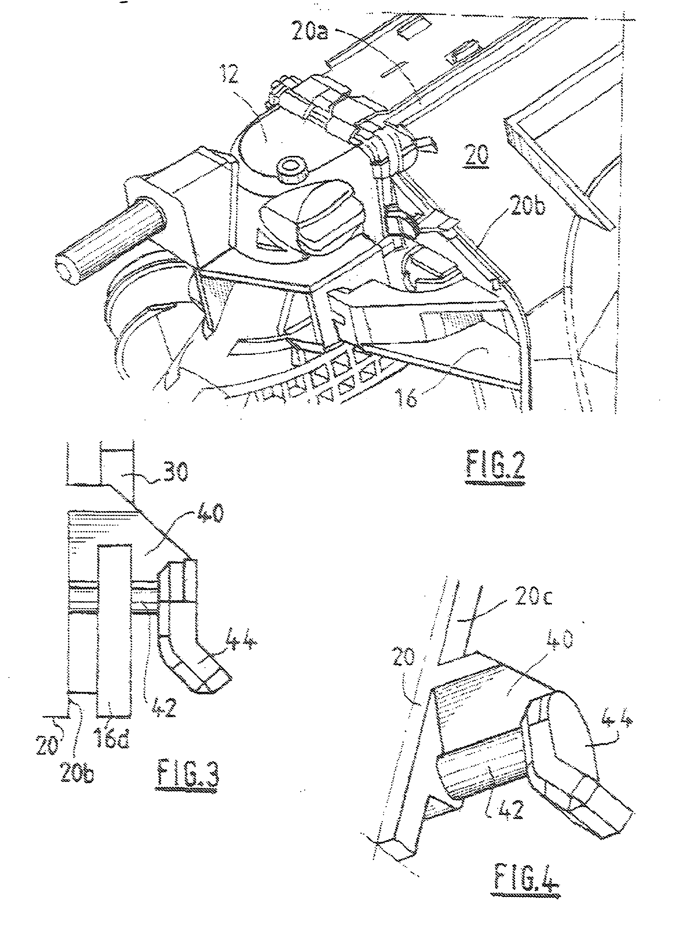

Cette fente 30 est conçue pour recevoir la patte 40 représentée sur les figures 3 et 4.

La figure 3 représente en vue de dessus la patte 40 insérée dans la fente 30 du convergent latéral 18. La patte 40 comprend un bord arrière 42 de section arrondie, apte à coopérer avec le fond arrondi 32 de la fente. Ce bord arrière 42 permet la rotation de la patte 42 dans la fente 30, lorsque seul le bord arrière 42 est inséré dans la fente 30, les bords arrière 42 des deux pattes du convergent supérieur jouant ainsi le rôle d'axe de rotation transversal, sensiblement horizontal.

Tel que visible sur la figure 3, la longueur du bord arrière 42 de chaque patte 40 est supérieure à la largeur (suivant la direction transversale) de la partie 16d du convergent latéral 16 dans laquelle la fente 30 est réalisée. La longueur du bord arrière 42 sera par exemple au moins deux fois plus grande que la largeur de la partie 16d.

Un mouvement relatif du convergent supérieur par rapport aux convergents latéraux suivant une direction sensiblement horizontale et transversale est ainsi possible.

Par ailleurs, l'extrémité du bord arrière 42 opposé au convergent supérieur est pourvue d'un bras 44 qui s'étend vers l'arrière en s'écartant du bord 20b du convergent supérieur. Ce bras 44 permet de guider et faciliter l'insertion de la patte 40 dans la fente 30 correspondante.

Ces dernières caractéristiques permettent d'absorber les dispersions qui se produisent au niveau du montage. En effet, le convergent supérieur est monté après les convergents latéraux, qui sont des pièces relativement souples et assez dispersées géométriquement. Ainsi, sur deux véhicules identiques, les positions réelles des convergents latéraux peuvent varier de plusieurs millimètres. La longueur du bord arrière 42 et la forme du bras 44 permettent d'absorber ces dispersions lors du montage du bras supérieur.

Dans l'exemple représenté sur les figures, les moyens de fixation sont situés sur les bords supérieurs de chacun des convergents latéraux et sur les bords latéraux du convergent supérieur.

Ces moyens de fixation sont des moyens d'encliquetage.

Dans l'exemple représenté, le bord supérieur de chaque convergent latéral 16, 18 est pourvu de deux pattes d'encliquetage aptes à venir en prise avec un logement correspondant réalisé dans le bord latéral correspondant du convergent supérieur.

La figure 6 représente le bord supérieur 16c du convergent latéral 16. Ce bord supérieur 16c présente deux pattes d'encliquetage 52 dont l'extrémité présente un rebord 54 faisant saillie, apte à venir en prise avec le bord du logement 60 prévu sur le bord latéral 20b du convergent supérieur, tel que représenté sur la figure 7. Sur cette dernière figure, seule une des pattes 52 et le logement 60 sont représentés, toutefois dans l'exemple, les deux pattes 52 sont insérées dans un même logement 60. Dans une variante non représentée, chaque patte pourrait coopérer avec un unique logement correspondant. On remarquera que le logement 60 présente une forme tronconique afin de faciliter l'insertion de la patte d'encliquetage.

Dans l'exemple représenté, les logements 60 sont des lumières traversant entièrement le convergent supérieur suivant la direction verticale, permettant ainsi le désengagement des pattes d'encliquetage, et le démontage du convergent.

Dans l'exemple, les deux pattes d'encliquetages 52 sont situées à proximité l'une de l'autre, leurs rebords 54 étant orientés dans des directions opposées. Plus précisément, ces rebords 54 sont situés sur les faces des pattes qui ne sont pas en regard. Dans l'exemple, ces faces sont situées dans des plans sensiblement verticaux et transversaux.

Le montage du convergent supérieur 20 est réalisé de la manière suivante, après fixation des convergents latéraux 16, 18 sur les échangeurs 12.

Le convergent supérieur 20 est approché des convergents latéraux 16, 18, et les bords arrière 42 des pattes 40 de chaque côté du convergent supérieur sont engagés dans leur fente 30 respective. On positionne ensuite le convergent supérieur par rapport aux convergents latéraux en poussant le convergent supérieur vers l'arrière et/ou transversalement jusqu'à ce que les logements 60 soient situés sensiblement au dessus des pattes d'encliquetage 52. On pivote ensuite le convergent supérieur en direction des convergents latéraux jusqu'à ce que les pattes 52 soient en prise avec les logements 60 correspondants.

De préférence, les bords latéraux du convergent supérieur et les bords supérieurs des convergents latéraux présentent des formes sensiblement complémentaires, de manière à ce que les bords latéraux du convergent supérieur soient en appui sur les bords supérieurs des convergents latéraux sur sensiblement toute la longueur de ces derniers. Ceci permet de limiter les fuites entre les convergents latéraux et supérieur. Ces bords peuvent éventuellement être équipés de joints souples afin d'améliorer l'étanchéité.

De préférence également, les moyens de fixation seront situés à distance des moyens de positionnement, de manière à assurer un bon placage du convergent supérieur sur les deux convergents latéraux.

Dans une variante non représentée, le dispositif de guidage d'air comprend uniquement des moyens de fixation du convergent supérieur sur les convergents latéraux. Ces moyens de fixation sont alors par exemple répartis le long des bords des convergents de manière à assurer un appui régulier du convergent supérieur sur les convergents latéraux. Ces moyens de fixation peuvent être similaires à ceux déjà décrits. La fixation peut également être réalisée par tout autre moyen adéquat (vissage, rivetage,...).

## Revendications

1. Dispositif de guidage d'air d'une structure de face avant de véhicule comprenant des échangeurs (12) situés en avant du moteur, ledit dispositif comprenant deux convergents latéraux (16, 18), destinés à être disposés de part et d'autre des échangeurs, et un convergent supérieur (20), destiné à être disposé sur le dessus des échangeurs, afin de guider l'air entrant par des entrées d'air du pare-chocs du véhicule jusqu'aux échangeurs, **caractérisé en ce que** les convergents latéraux (16, 18) et le convergent supérieur (20) sont équipés de moyens de fixation aptes à assurer la fixation du convergent supérieur uniquement sur chacun des convergents latéraux.

2. Dispositif de guidage d'air selon la revendication 1, **caractérisé en ce qu'**il est pourvu de moyens de positionnement du convergent supérieur sur les convergents latéraux.

3. Dispositif de guidage selon la revendication 2, **caractérisé en ce que** les moyens de positionnement comprennent au moins un organe de réception femelle disposé sur chacun des convergents latéraux, et au moins deux organes mâles solidaires du convergent supérieur, chaque organe mâle étant apte à coopérer avec l'un des organes femelles.

4. Dispositif de guidage selon la revendication 3, **caractérisé en ce que** l'organe de réception femelle est une fente (30) réalisée sur le bord supérieur de chaque convergent latéral, et l'organe mâle est une patte (40) apte à s'insérer dans ladite fente disposée sur le bord latéral du convergent supérieur.

5. Dispositif de guidage selon la revendication 3 ou 4, **caractérisé en ce que** les organes mâles et femelles sont disposés et conçus de manière à permettre une rotation du convergent supérieur par rapport aux convergents latéraux suivant un axe sensiblement horizontal et transversal.

6. Dispositif de guidage selon l'une des revendications 3 à 5, **caractérisé en ce que** les organes mâles et femelles sont conçus de manière à permettre un mouvement relatif du convergent supérieur par rapport aux convergents latéraux suivant une direction sensiblement horizontale et transversale.

7. Dispositif de guidage selon l'une des revendications 1 à 6, **caractérisé en ce que** les moyens de fixation sont situés sur les bords supérieurs de chacun des convergents latéraux et sur les bords latéraux du convergent supérieur.

8. Dispositif de guidage selon la revendication 1, **caractérisé en ce que** les moyens de fixation sont des moyens d'encliquetage.

9. Dispositif de guidage selon la revendication 8, **caractérisé en ce que** les moyens d'encliquetage comprennent au moins une patte d'encliquetage (52) apte à venir en prise avec au moins un logement correspondant (60), ledit logement présentant une forme tronconique afin de faciliter l'insertion de la patte d'encliquetage.

## Claims

1. Device for guiding air from a vehicle front end structure comprising exchangers (12) situated upstream of the engine, said device comprising two lateral convergents (16, 18), intended to be arranged on either side of the exchangers, and a top convergent (20), intended to be arranged above the exchangers, in order to guide the air entering through the air inlets of the bumper of the vehicle to the exchangers, **characterized in that** the lateral convergents (16, 18) and the top convergent (20) are equipped with fastening means suitable for ensuring the fastening of the top convergent only to each of the lateral convergents.

2. Air guiding device according to Claim 1, **characterized in that** it is provided with means for positioning the top convergent on the lateral convergents.

3. Guiding device according to Claim 2, **characterized in that** the positioning means comprise at least one female receiving member arranged on each of the lateral convergents, and at least two male members attached to the top convergent, each male member being suitable for cooperating with one of the female members.

4. Guiding device according to Claim 3, **characterized in that** the female receiving member is a slot (30) formed on the top edge of each lateral convergent, and the male member is a tab (40) suitable for insertion in said slot arranged on the lateral edge of the top convergent.

5. Guiding device according to Claim 3 or 4, **characterized in that** the male and female members are arranged and designed so as to allow for a rotation of the top convergent relative to the lateral convergents about a substantially horizontal and transversal axis.

6. Guiding device according to one of Claims 3 to 5, **characterized in that** the male and female members are designed so as to allow for a relative movement of the top convergent relative to the lateral convergents in a substantially horizontal and transversal direction.

7. Guiding device according to one of Claims 1 to 6, **characterized in that** the fastening means are situated on the top edges of each of the lateral convergents and on the lateral edges of the top convergent.

8. Guiding device according to Claim 1, **characterized in that** the fastening means are snap-fitting means.

9. Guiding device according to Claim 8, **characterized in that** the snap-fitting means comprise at least one snap-fitting tab (52) suitable for engaging with at least one corresponding recess (60), said recess having a tapered form in order to facilitate the insertion of the snap-fitting tab.

## Patentansprüche

1. Luftführungsvorrichtung einer Frontstruktur eines Fahrzeugs, die vor dem Motor befindliche Tauscher (12) enthält, wobei die Vorrichtung zwei seitliche Luftleiter (16, 18), die dazu bestimmt sind, zu beiden Seiten der Tauscher angeordnet zu werden, und einen oberen Luftleiter (20) enthält, der dazu bestimmt ist, an der Oberseite der Tauscher angeordnet zu werden, um die durch Lufteinlässe des Stoßdämpfers des Fahrzeugs eintretende Luft bis zu den Tauschern zu führen, **dadurch gekennzeichnet, dass** die seitlichen Luftleiter (16, 18) und der obere Luftleiter (20) mit Befestigungseinrichtungen ausgestattet sind, die geeignet sind, um die Befestigung des oberen Luftleiters nur an jedem der seitlichen Luftleiter zu gewährleisten.

2. Luftführungsvorrichtung nach Anspruch 1, **dadurch gekennzeichnet, dass** sie mit Einrichtungen zur Positionierung des oberen Luftleiters auf den seitlichen Luftleitern versehen ist.

3. Führungsvorrichtung nach Anspruch 2, **dadurch gekennzeichnet, dass** die Positioniereinrichtungen mindestens ein Aufnahmeelement, das auf jedem der seitlichen Luftleiter angeordnet ist, und mindestens zwei Einsteckelemente enthalten, die fest mit dem oberen Luftleiter verbunden sind, wobei jedes Einsteckelement mit einem der Aufnahmeelemente zusammenwirken kann.

4. Führungsvorrichtung nach Anspruch 3, **dadurch gekennzeichnet, dass** das Aufnahmeelement ein Schlitz (30) ist, der am oberen Rand jedes seitlichen Luftleiters ausgebildet ist, und das Einsteckelement eine Lasche (40) ist, die in den Schlitz eingeführt werden kann und am Seitenrand des oberen Luftleiters angeordnet ist.

5. Führungsvorrichtung nach Anspruch 3 oder 4, **dadurch gekennzeichnet, dass** die Einsteck- und Aufnahmeelemente so angeordnet und konzipiert sind, dass sie eine Drehung des oberen Luftleiters bezüglich der seitlichen Luftleiter gemäß einer im Wesentlichen waagrechten und quer verlaufenden Achse erlauben.

6. Führungsvorrichtung nach einem der Ansprüche 3 bis 5, **dadurch gekennzeichnet, dass** die Einsteck- und Aufnahmeelemente konzipiert sind, um eine relative Bewegung des oberen Luftleiters bezüglich der seitlichen Luftleiter gemäß einer im Wesentlichen waagrechten und quer verlaufenden Richtung zu erlauben.

7. Führungsvorrichtung nach einem der Ansprüche 1 bis 6, **dadurch gekennzeichnet, dass** die Befestigungseinrichtungen sich an den oberen Rändern jedes der seitlichen Luftleiter und an den Seitenrändern des oberen Luftleiters befinden.

8. Führungsvorrichtung nach Anspruch 1, **dadurch gekennzeichnet, dass** die Befestigungseinrichtungen Einrasteinrichtungen sind.

9. Führungsvorrichtung nach Anspruch 8, **dadurch gekennzeichnet, dass** die Einrasteinrichtungen mindestens eine Einrastlasche (52) enthalten, die mit mindestens einem entsprechenden Sitz (60) in Eingriff kommen kann, wobei der Sitz eine Kegelstumpfform aufweist, um das Einführen der Einrastlasche zu erleichtern.
